(19) Europäisches Patentamt
European Patent Office
Office européen des brevets

(11) Veröffentlichungsnummer: **0 332 935 A1**

(12) # EUROPÄISCHE PATENTANMELDUNG

(21) Anmeldenummer: **89103580.0**

(51) Int. Cl.⁴: **G01N 27/12 , G01N 21/78**

(22) Anmeldetag: **01.03.89**

(30) Priorität: **14.03.88 DE 3808468**
**14.03.88 DE 3808467**

(43) Veröffentlichungstag der Anmeldung:
**20.09.89 Patentblatt 89/38**

(84) Benannte Vertragsstaaten:
**AT BE CH DE FR GB IT LI NL**

(71) Anmelder: **Siemens Aktiengesellschaft**
**Wittelsbacherplatz 2**
**D-8000 München 2(DE)**

(72) Erfinder: **Dickert, Franz, Prof.Dr.**
**August-Euler-Weg 10**
**D-8500 Nürnberg(DE)**
Erfinder: **Mages, Gert, Dr.**
**Grabenäcker 5**
**D-8551 Hemhofen(DE)**
Erfinder: **Zeltner, Doris, Dipl.-Chem.**
**Äussere-Brucker-Strasse 43**
**D-8520 Erlangen(DE)**
Erfinder: **Kimmel, Heinz, Dr.**
**Am Ruhstein 59**
**D-8520 Buckenhof(DE)**

(54) **Sensomaterial zur Messung des Partialdruckes von Gasen oder Dämpfen und Gassensor.**

(57) Als Sensor für Gase oder Dämpfe, insbesondere für Lösungsmitteldämpfe, ist erfindungsgemäß ein Sensormaterial (16) vorgesehen, das wenigstens teilweise aus wenigstens einem hydrophoben Metallkomplex besteht, dessen Ionenbeweglichkeit oder Ionenkonzentration oder optische Eigenschaften sich durch die Gaseinwirkung verändert. Diese Metallkomplexe können auf geeignete Elektrodenanordnungen oder Träger aufgebracht werden und in Verbindung mit einfachen Meßbrücken oder Photometern ein Sensorsystem für Gase und Dämpfe bilden.

In weiteren Ausführungsformen kann der Sensor auch als Feldeffekttransistor, als MOS- Diode oder in Hybridbauweise gestaltet sind.

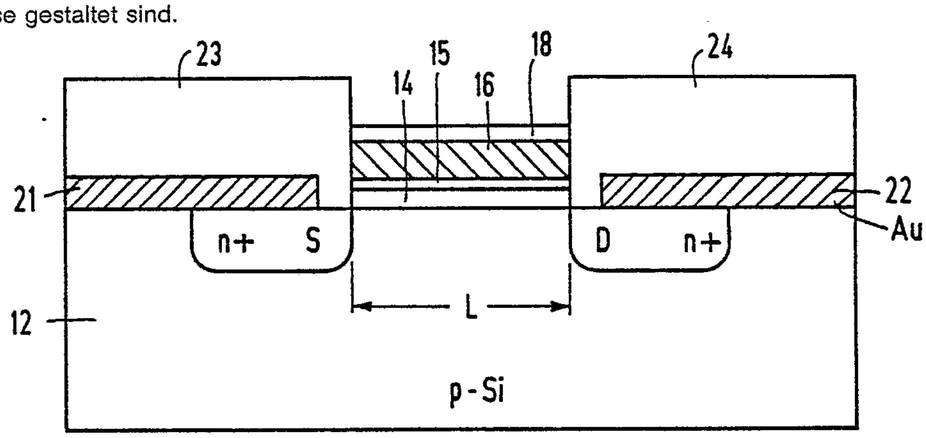


FIG 6

EP 0 332 935 A1

## Sensormaterial zur Messung des Partialdruckes von Gasen oder Dämpfen und Gassensor

Die Erfindung bezieht sich auf ein Sensormaterial zur Messung des Partialdruckes von Gasen oder Dämpfen, insbesondere von Lösungsmitteldämpfen, mit einem Sensormaterial, dessen elektrische oder optische Eigenschaften sich unter der Einwirkung der Gase ändern, sowie auf einen Gassensor aus diesem Material.

Es sind Sensoren zur Messung von Gasen und Dämpfen bekannt, die als Sensormaterial ein optisches Filter mit reversibler Farbänderung enthalten. Auch die Transparenz des Filters kann sich unter der Einwirkung der Gase ändern. Diese Filter enthalten ein Gemisch von einem basischen oder sauren Farbbildner oder Farbstoff und einer komplementären Verbindung. Als Farbbildner können beispielsweise Triphenylmethan-Systeme, insbesondere Kristallviolettlacton, vorgesehen sein. Ferner können sie Farbstoffe des Triphenylmethan-Systems, insbesondere Phthaleine oder Sulfophthaleine, enthalten und auch in eine Matrix eingebettet und mit einem Träger versehen sein. Die Änderung der Transparenz des Filters unter der Einwirkung der Gase oder Dämpfe wird in ein elektrisches Signal umgesetzt und in einer Elektronik verarbeitet (DE-OS 35 06 686).

Der Erfindung liegt die Aufgabe zugrunde, einen Sensor für Gase oder Dämpfe anzugeben, der besonders einfach aufgebaut und mit einem empfindlichen Sensormaterial versehen ist.

Es sind Metallkomplexe bekannt, deren Liganden hydrophobierende Eigenschaften besitzen. Zu dieser Substanzklasse gehören einzähnige Liganden, beispielsweise Dimethylformamid, zweizähnige Liganden, sog. Chelatliganden, beispielsweise Ethylendiamine und Acetylacetonate, Podanden und Makrocylen, insbesondere Kronenether und Kryptanden.

Es kann auch die Änderung der elektrischen Eigenschaften, beispielsweise die Änderung der Dielektrizitätskonstante oder der elektrischen Leitfähigkeit, zur Messung von Gasen oder Dämpfen herangezogen werden. Es kann beispielsweise ein Ionenleiter als Sensor für Gase, beispielsweise für Sauerstoff, verwendet werden. In einer bekannten Ausführungsform trennt der Ionenleiter zwei Gasräume mit verschiedenem Sauerstoffpartialdruck voneinander. Auf beiden Seiten des Ionenleiters ist poröses Platin aufgebracht. Mit dem zu messenden Gas bildet das Platin eine Gaselektrode. Besteht ein Unterschied in den Gasdrucken auf den beiden Seiten des Ionenleiters, so entsteht zwischen den beiden Platinelektroden ein Potentialunterschied. Diese Änderung der elektrischen Eigenschaften durch die Gaseinwirkung kann als Meßgröße verwendet werden (Sensorik, Springer-verlag, Heidelberg, 1986, Seiten 166 - 170).

Es sind auch Sensoren zur selektiven Bestimmung von Komponenten in flüssiger oder gasförmiger Phase mit einer MOS-Struktur (metal oxide semiconductor) in der Form eines Feldeffekttransistors oder einer MOS-Diode bekannt, die zur qualitativen oder quantitativen Bestimmung von Analyten, beispielsweise Molekülen oder Ionen, in Flüssigkeiten oder Gasen geeignet sind. Zwischen einer Drain- und einer Source-Elektrode, die durch dotierte Oberflächenbereiche des Halbleitersubstrats gebildet werden, entsteht ein halbleitender Kanal. Im Bereich dieses Kanals ist das Substrat durch eine Isolierschicht aus Siliciumdioxid $SiO_2$ abgedeckt, die noch durch eine dünne Schutzschicht aus Siliciumnitrid $Si_3N_4$ abgedeckt sein kann. Eine weitere Gate-Isolatorschicht dient als Sensorschicht für die zu messenden Gase und ist unter einer gasdurchlässigen Gate-Elektrode angeordnet. Diese Sensorschicht mit einer Dicke von etwa 0,01 bis 1 $\mu m$ besteht aus einem Heteropolysiloxan; das sind Silikate, die durch Einbau funktioneller Gruppen und durch die Umsetzung mit anderen, ebenfalls hydrolysierbaren und kondensierbaren Metallverbindungen organisch modifiziert sind. Durch diesen Einbau funktioneller Gruppen, beispielsweise primärer Aminogruppen, entstehen Adsorptionszentren, welche die gewünschte selektive Wechselwirkung mit Analyten ermöglichen. Durch die Änderung der elektrischen Eigenschaften oder Sensorschicht und gegebenenfalls die Änderung der Austrittsarbeit des Gate-Metalls als zusätzliche Einflußgröße wird die Schwellenspannung des Feldeffekttransistors und damit der Drainstrom bei konstanter Drain-Source-Spannung geändert, so daß eine quantitative Bestimmung des Gases möglich ist (DE-OS 35 26 348).

Die Gate-Elektrode kann aus einer sehr dünnen Metallschicht bestehen, die beim Aufwachsen Inseln gebildet hat, die noch nicht vollständig zusammengewachsen sind. Zwischen den Inseln sind noch Öffnungen verblieben, die einen Gasdurchtritt ermöglichen. Ferner kann die Gate-Elektrode aus einer Metallschicht bestehen, die mit einem Muster von Bohrungen mit sehr geringem Durchmesser versehen ist, beispielsweise durch einen Laserstrahl sowie durch einen Elektronen- oder Ionenstrahl. Außerdem kann die Gate-Elektrode als Gitterelektrode ausgeführt sein oder auch aus Streifen bestehen, die in einem geringen Abstand voneinander angeordnet sind (DE-OS 29 47 050).

Die Lösung der genannten Aufgabe besteht nun gemäß der Erfindung darin, daß das Sensormaterial wenigstens teilweise aus wenigstens einem hydrophoben Metallkomplex besteht. Die Erfindung beruht nämlich auf der Erkenntnis, daß es Metallkomplexe mit hydrophobierenden Liganden gibt, die insbesondere

in dünnen Filmen unter der Einwirkung von Gasen oder Dämpfen ihre Ionenkonzentration, ihre Ionenbeweglichkeit und/oder ihre Transparenz und damit ihre dielektrischen bzw. optischen Eigenschaften ändern können. Über Widerstands-, Kapazitäts- oder optische Messungen ist eine quantitative Bestimmung des interessierenden Gases oder Lösungsmitteldampfes möglich.

Diese Sensoren gestatten auf einfache Weise auch bei Raum- oder Umgebungstemperaturen das Messen des Partialdruckes bzw. der Konzentration von Gasen und Dämpfen praktisch aller üblichen Lösungsmittel, von aliphatischen, aromatischen Kohlenwasserstoffen, auch halogeniert, über Alkohole und andere protische Solventien, bis zu polaren und aprotischen Lösungsmitteln, wie beispielsweise Aceton und Dimethylformamid und auch von Gasen, wie beispielsweise Ammoniak. Man erhält eine der zu messenden Konzentration bzw. dem zu messenden Partialdruck analoge reversible Widerstands- oder Kapazitätsänderung oder auch eine Änderung der optischen Eigenschaften. Diese reversible Änderung ist analog der Konzentration des einwirkenden Dampfes bzw. Gases. Die Nachweisgrenzen liegen dabei wesentlich unter 1 ppm. Da der Sensor auch in Gegenwart von Trägergas, insbesondere Luft, zuverlässig arbeitet, ist er auch für die Prozeßkontrolle, die Arbeitsplatzüberwachung oder allgemein im Rahmen des Umweltschutzes einsetzbar.

In einer besonderen Ausführungsform enthält das Sensormaterial makrocyclische Metallkomplexe, insbesondere mit Liganden vom Typus Kronenether oder Cryptanden. Als Liganden können vorzugsweise §-Benzo[15]Krone-5 oder auch §-Benzo-Cryptanden, beispielsweise §-5,6-Benzo-4,7,13,16,21,24-hexaoxa-1,10-diazabizyclo-(8,8,8)-hexacosan gewählt werden, die unter der Bezeichnung §-$222_B$ bekannt sind. Die Metallkomplexe können vorzugsweise einen polymeren Kronenether oder Kryptanden enthalten, der an einem Metallion mit variabler Ladung koordiniert, beispielsweise an einem Natriumion $Na^+$ oder einem Kaliumion $K^+$ oder einem Magnesiumion $Mg^{++}$ oder an Übergangsmetallionen, beispielsweise Kobalt $Co^{++}$, Nickel $Ni^{++}$ oder Kupfer $Cu^{++}$. Besonders vorteilhaft sind polymere Strukturen, die stabile Sensorschichten ergeben.

Ferner geeignet sind macrocyclische Metallkomplexe mit Gegenionen variabler Nukleophilie, beispielsweise Chloridanionen $Cl^-$ oder Perchloratanionen $ClO_4^-$.

Um die Ionenbildung zu begünstigen und Selektivität für den Sensor zu erzielen, kann das Sensormaterial vorzugsweise protische oder aprotische Cosubstanzen enthalten. Das sind Verbindungen, die zur Anionen- oder Kationensolvatation geeignet sind und somit positiv oder negativ geladene Teilchen stabilisieren können. Dies können beispielsweise feste oder auch polyfunktionelle Alkohole sein; besonders geeignet ist Pyrogallol oder veretherte Polyethylenglykole.

In einer besonderen Ausführungsform kann das sensoraktive Material auch in eine Matrix eingebettet werden, die aus organischen oder anorganischen polymeren Substanzen bestehen kann, wie beispielsweise Polyvinylchlorid PVC, Silicone und Kollodium. Vorzugsweise geeignet sind Polymere mit aktiven funktionellen Gruppen, die zur Kationen- und Anionensolvatation geeignet sind.

Das sensoraktive Material ist vorzugsweise auf einem Träger angeordnet, der beispielsweise aus Glas, Keramik oder Kunststoff bestehen kann. Für optische Messungen vorzugsweise geeignet ist ein transparentes Material, beispielsweise Glas oder ein transparenter Kunststoff, insbesondere eine dünne Polyesterfolie.

Die Elektrodenanordnung des Sensors besteht im allgemeinen aus einem korrosionsbeständigen Metall, vorzugsweise Gold oder Platin, das mit den üblichen Techniken, wie beispielsweise mit Photoresist oder auch mit kolloidalen Lösungen, auf den Träger aufgebracht werden kann.

Zur weiteren Erläuterung der Erfindung wird auf die Zeichnung Bezug genommen, in deren Figur 1 ein Ausführungsbeispiel eines Sensors gemäß der Erfindung als Draufsicht schematisch dargestellt ist. Figur 2 zeigt eine Seitenansicht des Sensors. In den Figuren 3 bis 5 ist die Abhängigkeit des elektrischen Widerstands von der Konzentration des Sensormaterials im Lösungsmittel jeweils in einem Diagramm veranschaulicht. In Figur 6 ist ein Sensor aus diesem Material dargestellt.

In der Ausführungsform eines Gassensors gemäß Figur 1 mit einer Länge L von beispielsweise etwa 40 mm und einer Breite B von etwa 8 mm sind zwei Elektroden 2 und 4 in der Form einer sogenannten Kammstruktur auf einem Substrat angeordnet, das in der Seitenansicht gemäß Figur 2 mit 6 bezeichnet ist. Die Elektroden 2 und 4 sind in ihren Endbereichen 3 bzw. 5 zum Anschluß elektrischer Leiter vorgesehen und können zu diesem Zweck mit zusätzlichen Metallauflagen, beispielsweise aus Kupfer, versehen sein. Die Elektroden 2 und 4 mit einer Breite von beispielsweise etwa 100 bis 200 $\mu m$ sind in einem geringen Abstand von beispielsweise etwa 50 $\mu m$ voneinander angeordnet. Auf die Kammstruktur der beiden Elektroden 2 und 4 wird eine vorbestimmte Menge einer das Sensormaterial enthaltende Lösung aufgetropft und das Lösungsmittel verdampft. Dabei bildet sich eine zusammenhängende Sensorschicht 8 des Sensormaterials, deren Dicke mindestens so groß ist, daß eine Inselbildung vermieden wird, und somit vorzugsweise wenigstens 50 nm betragen kann und im allgemeinen 2 $\mu m$ nicht wesentlich überschreitet.

In einer weiteren Ausführungsform des Gassensors mit einem Sensormaterial gemäß der Erfindung

kann auch eine Transmissionsanordnung dadurch gebildet werden, daß ein transparenter Träger 6 vorgesehen ist, der beispielsweise aus Glas oder einem transparenten Kunststoff, vorzugsweise Polyester, bestehen kann.

Zum Herstellen des Sensors können beispielsweise 52,5 mg Kronenether (§-Benzo[15]Krone-5) gemäß folgender Darstellung

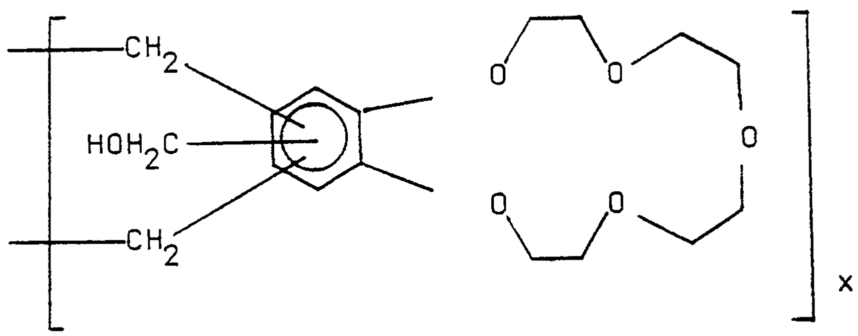

in 25 ml einer Mischung von Tetrahydrofuran/Methanol(1:1) gelöst sein. Bei Zugabe von 13 mg Kaliumchlorid erhält man eine etwas dunklere Lösung. Etwa 100 µl Lösung wird auf die Kammstruktur der Elektroden 2 und 4 aufgetropft.

Im Diagramm der Figur 3 ist der elektrische Widerstand R in Ohm über der Konzentration $C_{LM}$ des Lösungsmittels in %o für ein Sensormaterial aufgetragen, das beispielsweise aus einer etwa 1 µm dicken Schicht aus §-Benzo 15 Krone-5 als Ligand und Kaliumchlorid als Metallion bestehen soll. Als Lösungsmittel ist in der Kurve a Benzol, b Essigester, c Methylenchlorid und d Aceton vorgesehen. Die Einwirkung erfolgt bei einer Luftfeuchtigkeit von 50 %. Dem Diagramm ist zu entnehmen, daß, ausgehend von einem Widerstand von $2.10^5$ Ohm bei einer Konzentration von $C_{LM}$ = 0 %o beispielsweise mit einer Konzentration von 45 %o Aceton im Gasraum der Widerstand auf $6.10^5$ Ohm steigt, wie es im Diagramm gestrichelt angedeutet ist. Den gleichen Widerstandswert erhält man mit einer Konzentration von etwa 12 %o Benzol im Gasraum.

Es sind für das Sensormaterial neben anderen Kationen auch zweifach geladene Ionen, beispielsweise Magnesium $Mg^{++}$ als Zentralion für die macrocyclischen Liganden anwendbar. Auch über das Gegenion kann der Effekt gesteuert werden, indem man beispielsweise die Nukleophilie des Anions variiert und das Chlorid- oder das Perchloratanion verwendet. Hierzu werden beispielsweise 21 mg §-Benzo 15 Krone-5 und 11,7 mg Mg $(ClO_4)_2$x6 $H_2O$ in 10 ml einer 6:1-Mischung von Chloroform und Methanol gelöst und davon etwa 100 µl auf die Elektrodenanordnung gemäß Figur 1 aufgebracht.

Mit dieser Ausführungsform des Sensors erhält man gemäß dem Diagramm der Figur 4, in dem wieder der elektrische Widerstand R in Ohm über der Konzentration $C_{LM}$ von Methylenchlorid in %o aufgetragen ist, eine etwa lineare Abhängigkeit des Widerstandes R von der Konzentration $C_{LM}$. Die dargestellte Kennlinie e ergibt sich mit einem Methylenchloridgehalt der Luft bei etwa 50 % Luftfeuchtigkeit.

Durch die Verwendung von Cosolventien bei der Herstellung der Sensorschicht kann man eine gewisse Spezifität für Lösungsmittel erreichen. Fügt man bei der Herstellung der Sensorschicht aus §-B[15]K-5, der in einer Mischung von Tetrahydrofuran/Methanol gelöst ist, beispielsweise die protische Verbindung Pyrogallol (1:1 Gew.-% zum Liganden §-B[15]K-5) hinzu, so ist der Widerstand der Schicht nahezu unabhängig von der Methylenchloridbegasung. Im Gegensatz zu der Abhängigkeit gemäß dem Diagramm der Figur 3 nimmt unter diesen Bedingungen der Widerstand bei Begasung mit Aceton und Methanol ab, wie dem Diagramm der Figur 5 zu entnehmen ist, in der wieder der elektrische Widerstand R in Ohm über der Konzentration $c_{LM}$ in %o aufgetragen ist. Die Kennlinien f für Methylenchlorid, g für Aceton und h für Methanol sind bei 30 % Luftfeuchtigkeit angegeben.

Zum Herstellen eines oligomeren Kronenethers kann in bekannter Weise der monomere Benzo[15]K-5 in Ameisensäure unter Zugabe von Formaldehyd gelöst werden, wobei Reaktionszeit, Temperatur und Mengenverhältnisse verändert werden, um über den Polymerisationsgrad geeignete Löslichkeiten für die jeweiligen Anwendungen zu erzielen.

In der Ausführungsform eines Gassensors gemäß Figur 6 ist ein Halbleitersubstrat 12, das beispielsweise aus p-dotiertem Sili cium bestehen kann, an seiner oberen Flachseite mit $n^+$-dotierten Oberflächenbereichen versehen, die als Source-Elektrode S bzw. als Drain-Elektrode D dienen. Zwischen der Source-Elektrode S und der Drain-Elektrode D wird ein Kanal mit einer Länge L von beispielsweise etwa 30 µm gebildet, dessen Oberflächenbereich mit einer Isolierschicht 14 versehen ist, die beispielsweise aus

Siliziumdioxid $SiO_2$ mit einer Dicke von etwa 70 nm bestehen kann. Diese Isolierschicht 14 ist noch durch eine Schutzschicht 15 abgedeckt, die beispielsweise aus Siliciumnitrid $Si_3N_4$ mit einer Dicke von etwa 30 nm bestehen kann.

Oberhalb dieser Schutzschicht 15 ist eine Sensorschicht 16 mit einer Dicke von beispielsweise etwa 0,05 bis 2 µm angeordnet, die von einer gasdurchlässigen Gate-Elektrode 18 abgedeckt ist. Die Elektrodenbereiche der Source-Elektrode S und der Drain-Elektrode D sind jeweils teilweise mit einer Metallschicht 21 bzw. 22 abgedeckt, die beispielsweise aus Gold Au mit einer Dicke von etwa 1 µm bestehen kann. Die Metallschichten 21 und 22 und die an den Kanal angrenzenden Oberflächenbereiche der Source-Elektrode S und der Drain-Elektrode D sind jeweils mit einer Abdeckung 23 bzw. 24 versehen, die vorzugsweise aus Kunststoff, insbesondere aus Polyimid, mit einer Dicke von vorzugsweise wenigstens einigen µm bestehen kann.

Die Sensorschicht 16 besteht wenigstens teilweise aus hydrophoben makrocyclischen Metallkomplexen mit Ionenleitung, insbesondere mit Liganden vom Typus Kronenether oder Cryptanden, deren Bestandteile und Eigenschaften in den Figuren 1 bis 5 erläutert sind.

Als gasdurchlässige Gate-Elektrode 18 kann vorzugsweise eine sehr dünne Schicht aus Metall, beispielsweise Gold Au, Platin Pt oder Palladium Pd, mit einer Dicke von vorzugsweise wenigstens 0,01 µm vorgesehen sein, die aus Inseln besteht, die zwar eine zusammenhängende Schicht bilden, jedoch noch nicht voll ständig zusammengewachsen sind und Löcher für den Durchtritt der Gase oder Dämpfe bilden. Ferner kann eine etwas dickere Metallschicht beispielsweise durch Photolithographie oder auch durch einen Laserstrahl mit einem Muster von Bohrungen mit geringem Durchmesser versehen sein, das den Gasdurchtritt ermöglicht. Die Dicke der Gate-Elektrode 18 wird im allgemeinen wenige µm nicht wesentlich überschreiten. Weiterhin kann die Gate-Elektrode 18 aus einander parallelen Streifen sowie einem Gitter oder Netz bestehen, das auf die Sensorschicht 16 aufgebracht, beispielsweise aufgedampft oder aufgesputtert, wird. Ferner kann auch suspendierter Kohlenstoff oder es können Metallteilchen aufgetragen werden. Vorzugsweise geeignet sind auch Ausführungsformen, die unter der Bezeichnung "suspended Gate" oder "extended Gate" bekannt sind.

Dieser Sensor gestattet auf einfache Weise auch bei Raum- oder Umgebungstemperaturen das Messen des Partialdruckes bzw. der Konzentration von Gasen und Dämpfen. Da er auch in Gegenwart von Trägergas, insbesondere Luft, zuverlässig arbeitet, ist dieser Sensor auch für die Prozeßkontrolle, die Arbeitsplatzüberwachung oder allgemein im Rahmen des Umweltschutzes einsetzbar. Man erhält eine den zu messenden Partialdruck analoge, reversible Änderung im Drain-Source-Strom.

Im Ausführungsbeispiel gemäß Figur 6 ist eine Ausführungsform des Sensors als Feldeffekt-Transistor gewählt, bei dem die Sensorschicht 16 mittelbar auf dem Halbleitersubstrat 12 angeordnet ist. Der Sensor kann jedoch auch in Hybrid-Bauweise ausgeführt sein. In der Hybrid-Technik sind in Schichttechnik hergestellte Leitungssysteme zu Funktionsgruppen, sogenannten Hybridschaltkreisen, verbunden. In dieser Ausführungsform ist das Substrat 12 von dem Schichtaufbau mit der Sensorschicht 16 räumlich getrennt, jedoch elektrisch leitend verbunden.

Neben der Ausführungsform des Sensors als Feldeffekttransistor kann der Sensor beispielsweise auch als MOS-Diode ausgeführt sein, bei der die Sensorschicht ebenfalls zwischen der gasdurchlässigen Metallelektrode und der Oxidschicht angeordnet ist.

## Ansprüche

1. Sensormaterial zur Messung der Partialdruckes von Gasen oder Dämpfen, insbesondere von Lösungsmitteldämpfen, mit einem Sensormaterial dessen elektrische oder optische Eigenschaften sich unter der Einwirkung der Gase ändern, **gekennzeichnet** durch ein Sensormaterial, das wenigstens teilweise aus wenigstens einem hydrophoben Metallkomplex besteht, dessen Ionenbeweglichkeit oder Ionenkonzentration sich unter Einwirkung der Gase ändert.

2. Sensor nach Anspruch 1, **dadurch gekennzeichnet,** daß das Sensormaterial macrocyclische Metallkomplexe enthält.

3. Sensor nach Anspruch 2, **gekennzeichnet** durch Kronenether.

4. Sensor nach Anspruch 3, **gekennzeichnet** durch §-Benzo[15]Krone-5.

5. Sensor nach Anspruch 2, **gekennzeichnet** durch Kryptanden.

6. Sensor nach Anspruch 5, **gekennzeichnet** durch §-Benzo-Cryptanden.

7. Sensor nach Anspruch 6, **gekennzeichnet** durch §-$222_B$.

8. Sensor nach Anspruch 1 oder 2, **dadurch gekennzeichnet,** daß das Sensormaterial Metallionen mit variabler Ladung enthält.

9. Sensor nach Anspruch 8, **gekennzeichnet** durch ein Natriumion $Na^{+}$ oder ein Kaliumion $K^{+}$ oder ein Magnesiumion $Mg^{++}$ oder ein Kobaltion $Co^{++}$ oder Nickelion $Ni^{++}$ oder Kupferion $Cu^{++}$.

10. Sensor nach Anspruch 1 oder 2, **dadurch gekennzeichnet,** daß das Sensormaterial Metallkomplexe mit Gegenionen variabler Nukleophilie enthält.

11. Sensor nach Anspruch 10, **gekennzeichnet** durch Chloridanionen $Cl^{-}$ oder Perchloratanionen $ClO_4^{-}$.

12. Sensor nach einem der Ansprüche 1 bis 11, **dadurch gekennzeichnet,** daß das Sensormaterial wenigstens eine protische Cosubstanz enthält.

13. Sensor nach Anspruch 12, **gekennzeichnet** durch Pyrogallol.

14. Sensor nach einem der Ansprüche 1 bis 11, **dadurch gekennzeichnet,** daß das Sensormaterial wenigstens eine aprotische Cosubstanz enthält.

15. Sensor nach Anspruch 14, **gekennzeichnet** durch veretherte Polyethylenglykole.

16. Sensor nach einem der Ansprüche 1 bis 15, **dadurch gekennzeichnet,** daß das Sensormaterial in eine Matrixsubstanz eingebettet ist.

17. Sensor nach einem der Ansprüche 1 bis 16, **dadurch gekennzeichnet,** daß das Sensormaterial auf einem Träger (6) angeordnet ist.

18. Sensor nach Anspruch 17, **gekennzeichnet** durch eine Transmissionsanordnung mit einem transparenten Träger (6).

19. Gassensor zur kontinuierlichen Messung des Partialdruckes von Gasen und Dämpfen in der Form eines Feldeffekttransistors, dessen Halbleitersubstrat zwischen der Source- und der Drain-Elektrode mit einer Isolierschicht versehen ist, die von einer gasdurchlässigen Gate-Elektrode durch eine Sensorschicht getrennt ist, **gekennzeichnet** durch eine Sensorschicht (6) die wenigstens teilweise aus einem Sensormaterial gemäß einem der Ansprüche 1 bis 18 besteht.

20. Gassensor nach Anspruch 19, **gekennzeichnet** durch ein substituiertes Phthalid.

21. Gassensor nach Anspruch 20, **gekennzeichnet** durch 3-(N-Methyl-3-indolyl)-6-dimethylaminophthalid.

22. Gassensor nach Anspruch 20, **gekennzeichnet** durch ein 3,3-Diphenylphthalid.

23. Gassensor nach Anspruch 22, **gekennzeichnet** durch ein 3,3-Bis(p-dimethylaminophenyl)-6-dimethylaminophthalid.

24. Gassensor nach Anspruch 22, **gekennzeichnet** durch 3-(p-Dimethylaminophenyl)-3-(p-methoxyphenyl)-6-dimethylaminophthalid.

25. Gassensor nach Anspruch 19, **gekennzeichnet** durch phenolische Säuren als saure Verbindung.

26. Gassensor nach Anspruch 25, **gekennzeichnet** durch 2,2-Bis(4-hydroxyphenyl)-propan.

27. Gassensor nach Anspruch 25, **gekennzeichnet** durch Hydroxy-(phenyl)-bis(p-hydroxyphenyl)-methan.

28. Gassensor nach einem der Ansprüche 19 bis 27, **gekennzeichnet** durch eine Hybrid-Bauform.

P 8524 E

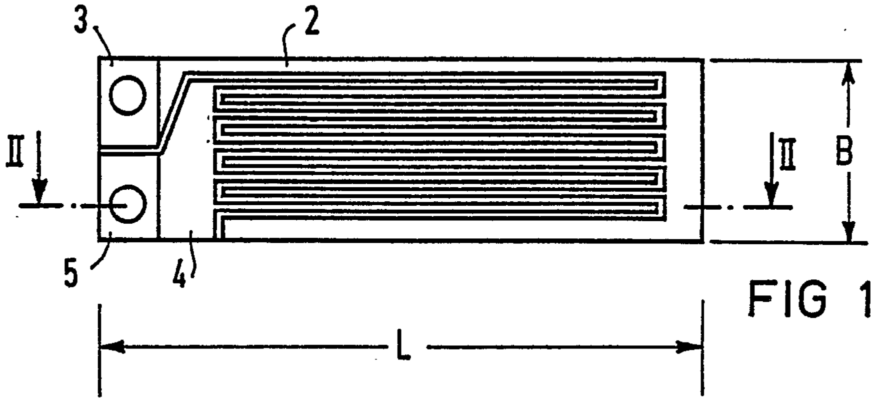


FIG 1

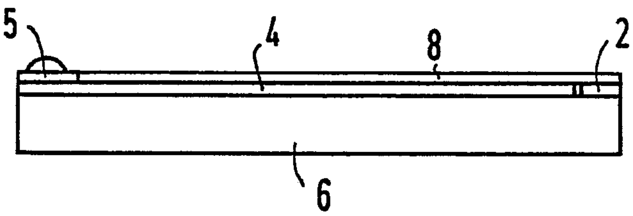


FIG 2

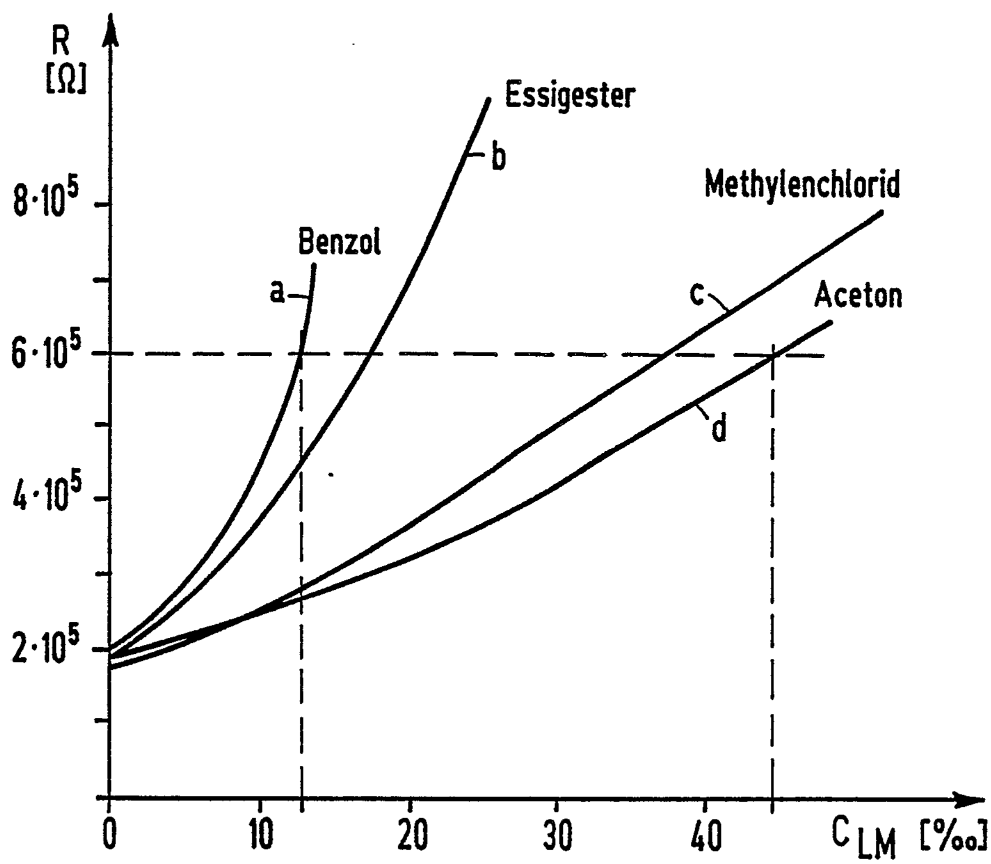


FIG 3

P 8524 E

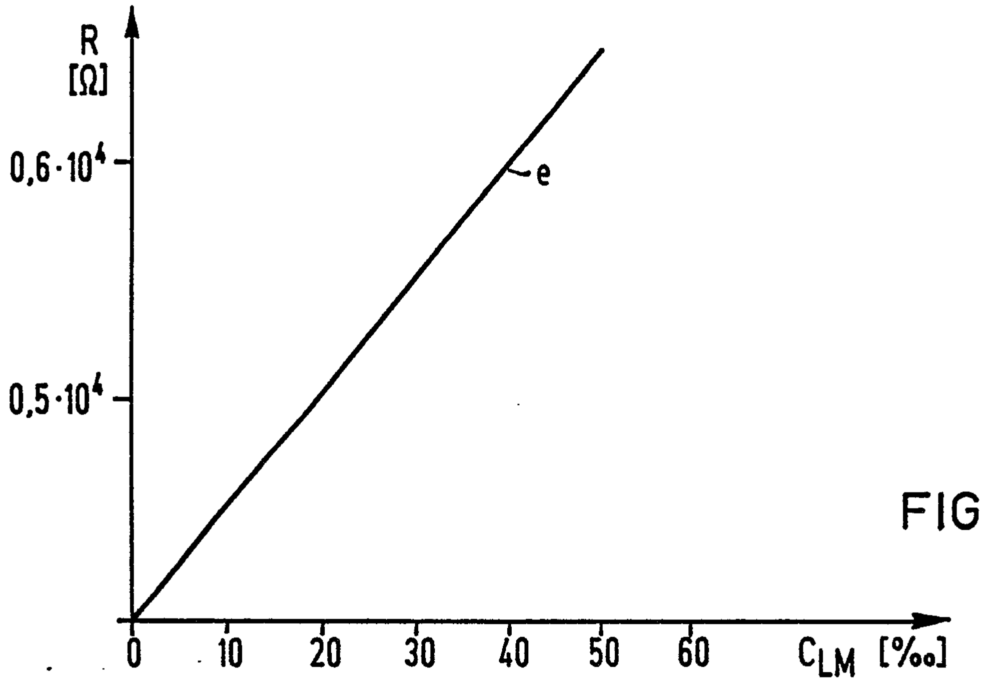


FIG 4

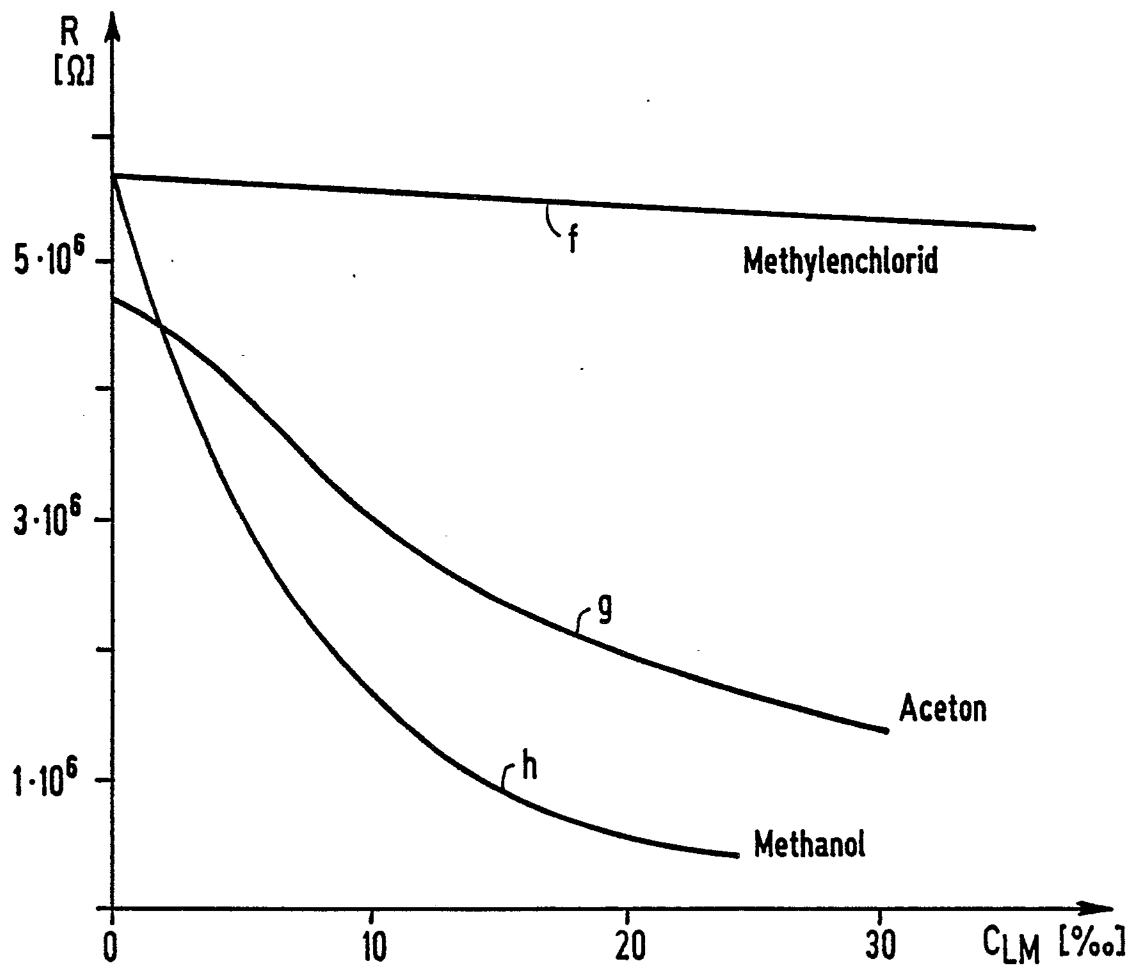


FIG 5

P 8524 E

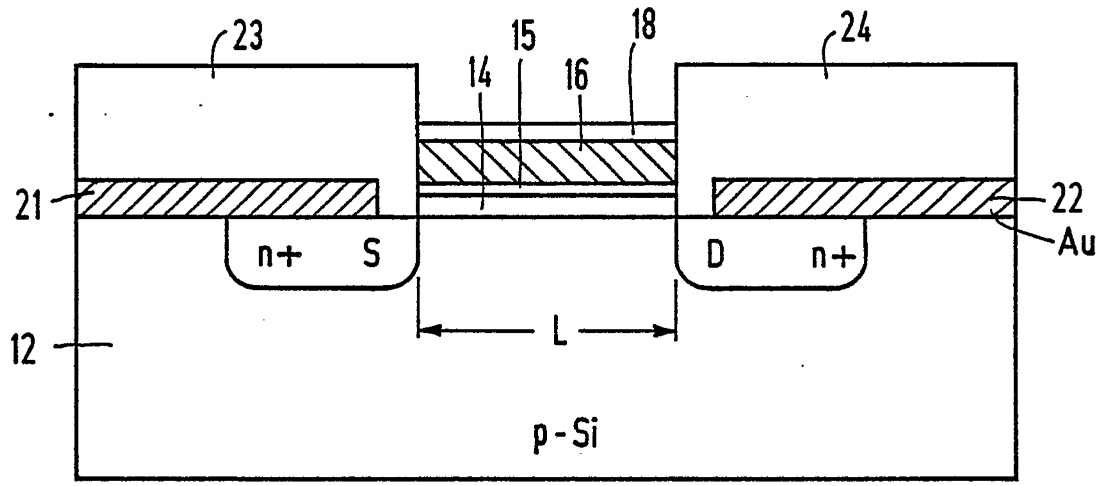


FIG 6

Europäisches Patentamt

# EUROPÄISCHER RECHERCHENBERICHT

Nummer der Anmeldung

EP 89103580.0

| EINSCHLÄGIGE DOKUMENTE | | | |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.4)** |
| Y | DE - A1 - 2 934 405 (MAKAIBO) * Ansprüche; Fig. 1; Seite 7, Zeile 15 - Seite 8, Zeile 14 * -- | 1-3,8, 17,19 | G 01 N 27/12<br>G 01 N 21/78 |
| Y | US - A - 4 722 905 (HONEYBOURNE) * Spalten 1,2; Ansprüche * -- | 1-3,8, 17,19 | |
| A | EP - A2 - 0 194 463 (SIEMENS) * Ansprüche 1-4 * -- | 1,16 | |
| A | EP - A2 - 0 251 934 (COMMISSARIAT A L'ENERGIE ATOMIQUE) -- | | |
| A | EP - A2 - 0 141 033 (CERBERUS) -- | | **RECHERCHIERTE SACHGEBIETE (Int. Cl.4)** |
| A | GB - A - 1 429 848 (VEB HOCHVAKUUM) -- | | G 01 N |
| A | DE - A1 - 3 217 883 (SIEMENS) ---- | | |

Der vorliegende Recherchenbericht wurde für alle Patentansprüche erstellt.

| Recherchenort | Abschlußdatum der Recherche | Prüfer |
|---|---|---|
| WIEN | 23-05-1989 | NARDAI |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82